(19) Europäisches Patentamt
European Patent Office
Office européen des brevets

(11) Veröffentlichungsnummer: **0 496 205 B1**

(12) **EUROPÄISCHE PATENTSCHRIFT**

(45) Veröffentlichungstag der Patentschrift: **24.05.95**

(21) Anmeldenummer: **92100190.5**

(22) Anmeldetag: **08.01.92**

(51) Int. Cl.$^{6}$: **C08G 18/66**, C08G 18/08, C08G 18/42, C08G 18/10, C08G 18/79, C08G 18/78, C09D 175/06, C08G 18/12

# (54) Wässrige Bindemittelkombination, ein Verfahren zu ihrer Herstellung und ihre Verwendung.

(30) Priorität: **19.01.91 DE 4101527**
**09.04.91 DE 4111392**

(43) Veröffentlichungstag der Anmeldung:
**29.07.92 Patentblatt 92/31**

(45) Bekanntmachung des Hinweises auf die Patenterteilung:
**24.05.95 Patentblatt 95/21**

(84) Benannte Vertragsstaaten:
**AT BE CH DE ES FR GB IT LI NL SE**

(56) Entgegenhaltungen:
**EP-A- 0 379 007**
**DE-A- 2 822 394**
**FR-A- 1 149 586**

**Houben-Weyl, Methoden der organischen Chemie; Bd. XIV/2, 4. Auflage (1963) Georg Thieme Verlag, S. 64/65**

(73) Patentinhaber: **BAYER AG**

**D-51368 Leverkusen (DE)**

(72) Erfinder: **Blum, Harald, Dr.**
**Auf dem Westkamp 1**
**W-4175 Wachtendonk 2 (DE)**
Erfinder: **Kubitza, Werner, D.I.**
**Eduard-Spranger-Strasse 22**
**W-5090 leverkusen 3 (DE)**
Erfinder: **Höhlein, Peter, Dr.**
**Windmühlenweg 3e**
**W-4152 Kempen 3 (DE)**

**EP 0 496 205 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine wäßrige Bindemittelkombination auf Basis von in Wasser dispergier- bzw. lösbaren Urethan-, Carboxylat- und Hydroxylgruppen enthaltenden Polyesterharzen sowie Polyisocyanaten, ein Verfahren zur Herstellung solcher Bindemittelkombinationen und deren Verwendung als Bindemittel in Lacken, Beschichtungs- und Dichtmassen.

Zweikomponenten-Polyurethanlacke des Standes der Technik haben aufgrund ihrer hervorragenden Eigenschaften eine große Bedeutung auf dem Beschichtungssektor. Von Nachteil dabei ist jedoch, daS zur Verarbeitung größere Mengen organischer Lösemittel erforderlich sind, die z.B. durch eine Nachverbrennung beseitigt werden müssen. In vielen, vor allem nichtindustriellen Anwendungsbereichen ist eine solche Nachverbrennung nicht durchführbar, so daß hier verstärkt festkörperreiche, vor allem jedoch wasserverdünnbare Beschichtungen gefordert werden, um die Lösemittelabgabe und die damit verbundene Umweltbelastung so gering wie möglich zu halten.

Die Verwendung von Wasser als flüssige Phase in Zweikomponenten-Polyurethanlacken mit freien Isocyanatgruppen ist normalerweise nicht ohne weiteres möglich, da Isocyanatgruppen nicht nur mit alkoholischen Hydroxylgruppen, sondern auch mit Wasser unter Harnstof- und Kohlendioxidbildung reagieren. Dadurch werden in der Regel die Standzeit, die Verarbeitungszeit und die Qualität der Überzüge auf nicht praxisgerechte Werte reduziert.

Eine erste Lösungsmöglichkeit wird in der DE-OS 38 29 587 beschrieben, in der ausgewählte Polyhydroxypolyacrylate mit Polyisocyanaten die freie Isocyanatgruppen aufweisen zu wäßrigen 2-Komponentensystemen kombiniert werden.

Überraschenderweise wurde nun gefunden, daß spezielle, wäßrige, Urethan-, Carboxylat- und Hydroxylgruppen enthaltende Polyesterharze ebenfalls mit freien Isocyanatgruppen aufweisenden Polyisocyanaten in wäßrigen 2-Komponenten-Bindemitteln eingesetzt werden können.

Gegenstand der Erfindung ist eine wäßrige Bindemittelkombination bestehend im wesentlichen aus

A) einer wäßrigen Lösung oder Dispersion mit einem Festkörpergehalt von 25 bis 65 Gew.-% und einem Gehalt an organischen Lösungsmitteln von unter 8 Gew.-% einer wasserverdünnbaren organischen Polyolkomponente und

B) einer Polyisocyanatkomponente einer Viskosität bei 23 °C von 50 bis 10 000 mPa.s, bestehend aus mindestens einem organischen Polyisocyanat, welche in der Komponente A) emulgiert vorliegt, wobei das NCO/OH-Äquivalentverhältnis, bezogen auf die Isocyanatgruppen der Komponente B) und die Hydroxylgruppen der in A) vorliegenden Polyolkomponente bei 0,5:1 bis 5:1 liegt,

dadurch gekennzeichnet, daß die in A) vorliegende Polyolkomponente aus mindestens einem Urethan-, Carboxylat- und Hydroxylgruppen aufweisenden Polyesterharz besteht.

Gegenstand der Erfindung ist auch ein Verfahren zur Herstellung von Beschichtungsmitteln mit einem max. Lösungsmittelgehalt von 20 Gew.-%, die aus einer wäßrigen Bindemittelkombination und gegebenenfalls aus der Lacktechnologie bekannten Hilfs- und Zusatzmitteln bestehen, dadurch gekennzeichnet, daß man in eine wäßrige Lösung oder Dispersion von Urethan-, Carboxylat- und Hydroxylgruppen enthaltenden Polyesterharzen eine Polyisocyanatkomponente einer Viskosität bei 23° C von 50 bis 10 000 mPa.s, bestehend aus mindestens einem organischen Polyisocyanat, welches gegebenenfalls in Abmischung mit geringen Mengen an inerten Lösungsmitteln zum Einsatz gelangt, emulgiert, wobei die Mengenverhältnisse der beiden Komponenten einem NCO/OH-Äquivalentverhältnis, bezogen auf die Isocyanatgruppen der Polyisocyanatkomponente und die Hydroxylgruppen des Polyesterharzes, von 0,5 : 1 bis 5 : 1 entsprechen, und wobei die gegebenenfalls mitverwendeten Hilfs- und Zusatzstoffe der Urethan-, Carboxylat- und Hydroxylgruppen enthaltenden Polyesterharzlösung bzw. -dispersion vor der Zugabe der Polyisocyanatkomponente einverleibt worden sind.

Gegenstand der Erfindung ist schließlich auch die Verwendung der erfindungsgemäßen Bindemittelkombinationen als Bindemittel für Lacke, Beschichtungs- oder Dichtmassen.

Bei der Komponente A) handelt es sich um Urethan-, Carboxylat- und Hydroxylgruppen enthaltende Polyesterharze, die vorzugsweise ein nach der Gelpermeationschromatographie unter Verwendung von geeichtem Polystyrol als Standard bestimmbares Molekulargewicht Mw (Gewichtsmittel) von 3000 bis 100 000, insbesondere von 6000 bis 50 000, eine Hydroxylzahl von 20 bis 240, vorzugsweise von 45 bis 190 mg KOH/g Substanz, eine Säurezahl (bezogen auf alle Carboxylgruppen, die dabei zu 25 bis 100, vorzugsweise zu 40 bis 100 % in Carboxylatform vorliegen) von 10 bis 45, vorzugsweise von 14 bis 33 mg KOH/g Substanz und einem Urethangruppengehalt

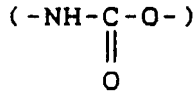

von 2,5 bis 15,0, vorzugsweise von 5,0 bis 12,5 Gew.-% aufweisen, wobei die Werte für Hydroxylzahl, Säurezahl und Urethangruppengehalt sich jeweils auf 100 % Festgehalt der Komponente A) beziehen.

Die Komponente A) kommt bei der Herstellung der erfindungsgemäßen Bindemittelkombination im allgemeinen in Form von 15 bis 65, vorzugsweise von 25 bis 55 gew.-%igen wäßrigen Lösungen bzw. Dispersionen zum Einsatz, die im allgemeinen eine Viskosität von 10 bis 30 000, vorzugsweise von 50 bis 10 000 mPa.s bei 23 °C und pH-Werte von 5 bis 10, vorzugsweise von 6 bis 9 aufweisen.

In Abhängigkeit vom Molekulargewicht der Urethan-, Carboxylat- und Hydroxylgruppen enthaltenden Polyesterharze A), dem Gehalt an Carboxyl- bzw. Carboxylatgruppen, sowie von der Art des eingesetzten Neutralisationsmittels und der gegebenenfalls mitverwendeten Hilfslösemittel liegen die Polyesterharze A) als Lösung oder als Dispersion vor, im allgemeinen sind jedoch sowohl gelöste als auch dispergierte Anteile vorhanden.

Die Herstellung der Urethan-, Carboxylat- und Hydroxylgruppen enthaltenden Polyesterharze erfolgt durch eine an sich bekannte Umsetzung von

a) 65 bis 92, vorzugsweise 70 bis 87 Gew.-% eines Polyesterpolyols mit einer Hydroxylzahl von 50 bis 500, vorzugsweise 80 bis 350 mg KOH/g Substanz und einer Säurezahl $\leq 6$, vorzugsweise $\leq 4$ mg KOH/g Substanz,

b) 0 bis 7, vorzugsweise 0 bis 3 Gew.-% eines Diols des Molekulargewichtsbereichs von 62 bis 240,

c) 2,5 bis 7,5, vorzugsweise 3,0 bis 6,5 Gew.-% einer 2,2-Bis(hydroxymethyl)alkancarbonsäure, oder einer dieser Säuremengen entsprechende Menge eines t-Aminsalzes einer solchen Säure und

d) 8 bis 30, vorzugsweise 10 bis 23 Gew.-% mindestens einer, mindestens difunktionellen Isocyanatkomponente des Molekulargewichtsbereichs 168 bis 2000, wobei sich die zu a) bis d) gemachten Prozentangaben zu 100 % ergänzen, in 40 bis 99 %iger organischer Lösung, gegebenenfalls auch in Substanz, d.h. 100 %ig, wobei die Komponenten a), b) und c) in einem organischen Lösemittel vorgelegt und in Gegenwart von 0 bis 2,5 Gew.-% geeigneter Katalysatoren bei Temperaturen von 40 bis 140 °C mit Teil d) derart zur Reaktion gebracht werden, daß nach der Umsetzung praktisch keine freien NCO-Gruppen mehr nachweisbar sind und dann das Reaktionsgemisch in Wasser dispergiert oder gelöst wird, wobei die in das Reaktionsprodukt eingeführten Carboxylgruppen während der Umsetzung oder vor bzw. nach des Dispergier- bzw. Löseschritts durch Zugabe einer Base zu 25 bis 100 % in Carboxylatgruppen überführt werden und wobei vor, während oder nach der Herstellung der Dispersion bzw. Lösung das organische Lösemittel gegebenenfalls teilweise oder ganz destillativ aus dem Reaktionsgemisch entfernt wird.

Die Herstellung der Polyesterpolyole a) erfolgt durch eine an sich bekannte Polykondensation von

$a_1$) 0 bis 60 Gew.-% mindestens einer Monocarbonsäure mit 6 bis 22 Kohlenstoffatomen,

$a_2$) 10 bis 65 Gew.-% Di- und/oder Tricarbonsäuren bzw. deren Anhydride,

$a_3$) 15 bis 70 Gew.-% di- und/oder höherfunktionelle Alkohole,

$a_4$) 0 bis 30 Gew.-% Monoalkohole und

$a_5$) 0 bis 25 Gew.-% Hydroxycarbonsäuren, Lactone, Aminoalkohole und/oder Aminocarbonsäuren,

wobei sich die zu $a_1$) bis $a_5$) gemachten Prozentangaben zu 100 % ergänzen, und wobei die Umsetzung gegebenenfalls unter Zuhilfenahme von üblichen Veresterungskatalysatoren vorzugsweise nach dem Prinzip einer Schmelz- oder Azeotropkondensation bei Temperaturen von 140 bis 240 °C unter Wasserabspaltung erfolgt.

Bei der Ausgangskomponente $a_1$) handelt es sich um eine Monocarbonsäurekomponente, die zumindest aus einer Monocarbonsäure des Molekulargewichtsbereichs von 112 bis 340 besteht. Geeignete Monocarbonsäuren sind z.B. Benzoesäure, tert.-Butylbenzoesäure, Hexahydrobenzoesäure, gesättigte Fettsäuren wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren wie z.B. Sojaölfettsäure, Ricinusölfettsäure, Sorbinsäure, Erdnußölfettsäure, Konjuenfettsäuren, Tallölfettsäure, Safflorölfettsäure sowie Gemische dieser oder anderer Monocarbonsäuren.

Bei der Ausgangskomponente $a_2$) handelt es sich um Di- und/oder Tricarbonsäuren bzw. deren Anhydride des Molekulargewichtsbereichs 98 bis 600. Geeignet sind z.B. Phthalsäure(anhydrid), Isophthalsäure, Terephthalsäure, Tetrahydrophthalsäure(anhydrid), Hexahydrophthalsäure(anhydrid), Maleinsäure(anhydrid), Bernsteinsäure(anhydrid), Fumarsäure, Adipinsäure, Sebacinsäure, Azelainsäure, Dimerfettsäuren, Trimerfettsäure, Trimellithsäure(anhydrid) und Gemische dieser oder anderer Säuren.

Bei der Ausgangskomponente $a_3$) handelt es sich um Diole, Triole, Tetraole bzw, höherwertige Alkoholkomponenten des Molekulargewichtsbereichs 62 bis 400. Geeignet sind z.B. Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butandiol, Trimethylpropan, Glycerin, Pentaerythrit, Trimethylpentandiol, Dipentaerythrit und Gemische dieser oder anderer mehrwertiger Alkohole.

Bei der Ausgangskomponente $a_4$) handelt es sich um Monoalkohole des Molekulargewichtsbereichs 100 bis 290 wie z.B. n-Hexanol, Cyclohexanol, Decanol, Dodecanol, Tetradecanol, Octanol, Octadecanol, natürliche Fettalkoholgemische wie z.B. Ocenol 110/130 (Fa. Henkel) und Gemische dieser und anderer Alkohole.

Bei der Ausgangskomponente $a_5$) handelt es sich um Hydroxycarbonsäuren, Lactone, Aminoalkohole und/oder Aminocarbonsäuren, wie z.B. Dimethylolpropionsäure, Milchsäure, Äpfelsäure, Weinsäure, $\epsilon$-Caprolacton, Aminoethanol, Aminopropanol, Diethanolamin, Aminoessigsäure, Aminohexansäure.

Bevorzugte Polyesterpolyole a) enthalten $a_1$) 0 bis 55 Gew.-% Monocarbonsäuren mit 7 bis 20 Kohlenstoffatomen wie Benzoesäure, 2-Ethylhexansäure, Isononansäure, hydrierte technische Fettsäuren bzw. deren Gemische (wie z.B. ®Prifrac 2950, ®Prifrac 2960, ®Prifrac 2980 von Unichema International), Stearinsäure, Palmitinsäure, Erdnußölfettsäure und/oder Sojaölfettsäure,

$a_2$) 13 bis 56 Gew.-% Di- und/oder Tricarbonsäuren bzw. deren Anhydride wie beispielsweise Phthalsäureanhydrid, Hexahydrophthalsäureanhydrid, Isophthalsäure, Maleinsäureanhydrid, Terephthalsäure, Fumarsäure, Adipinsäure, Benzoltricarbonsäure und/oder Dimerfettsäure, sowie

$a_3$) 25 bis 63 Gew.-% di- und/oder höherfunktionelle Alkohole wie z.B. Ethylenglykol, 1,2-Propylenglykol, 1,6-Hexandiol, 1,4-Cyclohexandimethanol, Neopentylglykol, Trimethylolpropan, Glycerin und/oder Pentaerythrit.

Im Falle einer azeotropen Veresterung wird das Schleppmittel, üblicherweise Isooctan, Xylol, Toluol oder Cyclohexan nach beendeter Reaktion im Vakuum abdestilliert.

Bei der Komponente b) handelt es sich um mindestens ein Diol des Molekulargewichtsbereichs von 62 bis 240, vorzugsweise um Neopentylglykol, 1,4-Cyclohexandimethanol, 1,6-Hexandiol und/oder Ethylenglykol.

Bei der Komponente c) handelt es sich um mindestens eine 2,2-Bis-(hydroxymethyl)-alkancarbonsäure mit insgesamt mindestens 5 Kohlenstoffatomen, vorzugsweise um 2,2-Bis-(hydroxymethyl)-propionsäure (Dimethylolpropionsäure) oder um ein t-Aminsalz einer solchen Säure, beispielsweise um das Triethylamin-Salz der Dimethylolpropionsäure.

Bei der Komponente d) handelt es sich um mindestens eine, mindestens difunktionelle Isocyanatkomponente des Molekulargewichtsbereichs 168 bis 2000. Geeignet sind beispielsweise Hexamethylendiisocyanat, Perhydro-2,4 und 4,4'-diphenylmethandiisocyanat, Isophorondiisocyanat, Toluylendiisocyanat, Naphthalindiisocyanat und andere Isocyanate wie sie z.B. in "Methoden der organischen Chemie" (Houben-Weyl, Bd. 14/2, 4. Auflage Georg Thieme Verlag Stuttgart 1963, S. 61-70) beschrieben werden.

Ebenfalls geeignet sind z.B. Lackpolyisocyanate auf Hexamethylendiisocyanat-, Isophorondiisocyanat- und Toluylendiisocyanatbasis die z.B. Urethangruppen, Uretdiongruppen, Isocyanurat- und/oder Biuretgruppen aufweisen.

Vorzugsweise eingesetzt werden Hexamethylendiisocyanat, Isophorondiisocyanat, Perhydro-2,4'- und 4,4'-diphenylmethandiisocyanat und Lackpolyisocyanate auf Hexamethylendiisocyanatbasis wie sie z.B. bei der Beschreibung der Komponente B erläutert sind. Ebenfalls geeignet sind Gemische der genannten und auch anderer Polyisocyanate.

Besonders bevorzugt ist eine solche wäßrige Bindemittelkombination, die dadurch gekennzeichnet ist, daß das Polyesterharz der Komponente A) ein Molekulargewicht $M_w$ von 6.000 bis 50.000, eine Hydroxylzahl von 45 bis 190 mg KOH/g Substanz, eine Säurezahl von 14 bis 33 mg KOH/g Substanz, wobei 40 bis 100 % der diese Säurezahl bewirkenden Carboxylgruppen in Carboxylatform vorliegen und einen Urethangruppengehalt von 5,0 bis 12,5 Gew.-% aufweist, wobei die Werte für Hydroxylzahl, Säurezahl und Urethangruppengehalt sich jeweils auf 100% Feststoff beziehen und wobei die Komponente A) das Umsetzungsprodukt von

a) 70 bis 87 Gew.-% eines Veresterungsprodukts mit einer Hydroxylzahl von 80 bis 350 und einer Säurezahl $\leqq 4$ aus

$a_1$) 0 bis 55 Gew.-% Monocarbonsäuren mit 7 bis 20 Kohlenstoffatomen,

$a_2$) 13 bis 56 Gew.-% Di- und/oder Tricarbonsäuren bzw. deren Anhydride und

$a_3$) 25 bis 63 Gew.-% di- und/oder höherfunktionelle Alkohole,

wobei sich die Prozentsätze zu $a_1$) bis $a_3$) zu 100 % ergänzen,

b) 0 bis 3 Gew.-% eines Diols des Molekulargewichtsbereichs von 62 bis 240,

c) 3,0 bis 6,5 Gew.-% Dimethylolpropionsäure bzw. einer dieser Säuremenge entsprechenden Menge eines t-Aminsalzes dieser Säure und

d) 10 bis 23 Gew.-% mindestens einer, mindestens difunktionellen Isocyanatkomponente des Molekulargewichtsbereichs 168 bis 2000 ist, und wobei sich die zu a) bis d) gemachten Prozentangaben zu 100 % ergänzen,

und die Polyisocyanatkomponente B) aus einem oder mehreren organischen Polyisocyanaten mit ausschließlich (cyclo)aliphatisch gebundenen Isocyanatgruppen besteht.

Geeignete organische Lösemittel zur Herstellung der Urethan-, Carboxylat- und Hydroxylgruppen enthaltenden Polyesterharze sind z.B. N-Methylpyrrolidon, Diethylenglykoldimethylether, Methylethylketon, Methylisobutylketon, Aceton, Xylol, Toluol, Butylacetat bzw. Gemische dieser oder anderer nicht NCO-reaktiver Lösemittel. Die verwendeten organischen Lösemittel können vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Geeignete Katalysatoren für die Urethanisierungsreaktion Können z.B. sein: tertiäre Amine wie z.B. Triethylamin, Zinn-II-octoat, Dibutylzinnoxid, Dibutylzinndilaurat und andere gebräuchliche Katalysatoren.

Vor oder während des Dispergierschrittes werden durch Zugabe von mindestens einer Base 25 bis 100, vorzugsweise 40 bis 100 % der eingebauten Carboxylgruppe in Carboxylatgruppen überführt, falls nicht als Komponente c) bereits Salze der genannten Art eingesetzt worden sind.

Geeignete Basen können z.B. sein: Ammoniak, N-Methylmorpholin, Triethylamin, Dimethylethanolamin, Methyldiethanolamin, Triethanolamin, Morpholin, Tripropylamin, Ethanolamin, Triisopropanolamin, 2-Amino-2-methyl-1-propanol bzw. Gemische dieser und anderer Neutralisationsmittel. Ebenfalls geeignet, jedoch weniger bevorzugt als Neutralisationsmittel sind Natriumhydroxid, Lithiumhydroxid und Kaliumhydroxid. Bevorzugte Neutralisationsmittel sind Ammoniak und Dimethylethanolamin.

Nach der Urethanisierungsreaktion können zur Erzielung bestimmter Eigenschaften auch geringe Mengen anderer organischer Lösemittel wie z.B. Ethanol, Propanol, Butanol, Butylglykol, Hexanol, Octanol, Butyldiglykol, Ethyldiglykol, Methyldiglykol und Methoxypropanol zugesetzt werden.

Im Dispergierschritt kann alternativ das Wasser/Neutralisationsmittelgemisch zum Harz, das Wasser zum Harz-/Neutralisationsmittelgemisch, das Harz zum Wasser/Neutralisationsmittelgemisch oder das Harz-/Neutralisationsmittelgemisch zum Wasser gegeben werden. Die Dispergierbarkeit der Harze in Wasser kann gewünschtenfalls durch Mitverwendung von externen Emulgatoren wie z.B. ethoxyliertes Nonylphenol beim Dispergieren verbessert werden.

Der Dispergierschritt wird üblicherweise bei 40 bis 120 °C durchgeführt. Die Urethan-, Carboxylat- und Hydroxylgruppen enthaltenden wäßrigen Bindemittelkomponenten A) weisen Festkörpergehalte (= Gehalt an gelösten und/oder dispergierten Polyesterharzen) von 25 bis 65, vorzugsweise von 30 bis 55 Gew.-% auf. Der Anteil an organischen Lösemitteln beträgt <8, vorzugsweise <6 % und ganz besonders bevorzugt <1,5 Gew.-%.

Bei der Polyisocyanatkomponente B) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente B) weist bei 23 °C im allgemeinen eine Viskosität von 50 bis 10 000, vorzugsweise von 50 bis 1000 mPa.s auf. Besonders bevorzugt handelt es sich bei der Polyisocyanatkomponente B) um Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23 °C von 50 bis 500 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln maximal 20 Gew.-% Lösungsmittel, bezogen auf die Menge an Wasser vorliegt, wobei auch das gegebenenfalls in den Polyesterdispersionen oder -lösungen noch vorliegende Lösungsmittel mit in die Berechnung eingeht.

Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis-(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen,

die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 31 24 605, 33 58 010, 39 03 126, 39 03 127 oder 39 76 622 erhalten werden können, und die aus Gemischen von N,N',N''-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 43 24 879 erhalten werden können, und die im wesentlichen aus N,N',N''-Tris-(6-isocyanatohexyl)-isocyanurat im Gemisch mit untergeordneten Mengen an seinen höheren Homologen bestehen.

Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen, Besonders bevorzugt sind die zuletzt genannten Gemische einer Viskosität bei 23°C von 50 bis 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen monomeren Diisocyanaten befreit worden sind.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen. Die Polyisocyanatkomponente B) kann im übrigen aus beliebigen Gemischen der beispielhaft genannten Polyisocyanate bestehen.

Zur Herstellung der wäßrigen Bindemittelkombinationen wird die Polyisocyanatkomponente B) in der wäßrigen Bindemittelkomponente A) emulgiert, wobei das gelöste bzw. dispergierte Polyesterharz gleichzeitig die Funktion eines Emulgators für das zugesetzte Polyisocyanat übernimmt, jedoch kann diese Funktion auch durch Mitverwendung von externen Emulgatoren unterstützt werden.

Die Durchführung kann durch einfaches Verrühren bei Raumtemperatur erfolgen. Die Menge der Polyisocyanatkomponente wird dabei so bemessen, daß ein NCO/OH-Äquivalentverhältnis, bezogen auf die Isocyanatgruppen der Komponente B) und die alkoholischen Hydroxylgruppen der Komponente A) von 0,5:1 bis 5:1, vorzugsweise 0,8:1 bis 2:1 resultiert.

Vor der Zugabe der Polyisocyanatkomponente B) können der Polyesterharzkomponente A), d.h. der Dispersion oder Lösung der Polyesterharze die üblichen Hilfs- und Zusatzmittel der Lacktechnologie einverleibt werden. Hierzu gehören beispielsweise Entschäumungsmittel, Verdickungsmittel, Verlaufhilfsmittel, Pigmente, Dispergierhilfsmittel für die Pigmentverteilung u.dgl..

Die Herstellung von Beschichtungsmitteln, die als Bindemittel erfindungsgemäße wäßrige Bindemittelkombinationen enthalten, erfolgt somit vorzugsweise in einem mehrstufigen Verfahren, wobei man in einem ersten Reaktionsschritt ein Urethan-, Carboxylat-und Hydroxylgruppen aufweisendes Polyesterharz mit einem Molekulargewicht Mw von 3000 bis 100 000, einer Hydroxylzahl von 20 bis 240, einer Säurezahl von 10 bis 45 und einem Urethangruppengehalt von 2,5 bis 15,0 Gew.-% durch Umsetzung bei 40 bis 140°C in 40 bis 98-gew.-%iger organischer Lösung von

a) 65 bis 92 Gew.-% eines Polyesterpolyols mit einer Hydroxylzahl von 50 bis 500 und einer Säurezahl ≤6,

b) 0 bis 7 Gew.-% eines Diols des Molekulargewichtsbereichs von 62 bis 240,

c) 2,5 bis 7,5 Gew.-% einer 2,2-Bis(hydroxymethyl)alkancarbonsäure, oder einer dieser Säuremenge entsprechenden Menge eines t-Aminsalzes einer solchen Säure und

d) 8 bis 30 Gew.-% mindestens einer mindestens difunktionellen Isocyanatkomponente des Molekulargewichtsbereichs 168 bis 2.000

herstellt, anschließend

in einem zweiten Reaktionsschritt das so erhaltene Polyesterharz in Wasser löst oder dispergiert, wobei gegebenenfalls vor und/oder während dieses Schritts 25 bis 100 % der gegebenenfalls vorliegenden

Carboxylgruppen durch Neutralisation in Carboxylatgruppen überführt werden, und wobei gegebenenfalls das organische Hilfslösungsmittel vor und/oder während und/oder nach der Herstellung der wäßrigen Lösung oder Dispersion ganz oder teilweise aus dem Reaktionsgemisch destillativ entfernt wird, und wobei schließlich
in einem dritten Reaktionsschritt, gegebenenfalls nach Zusatz von Hilfs- und Zusatzmitteln, die Polyisocyanatkomponente in der so erhaltenen wäßrigen Lösung oder Dispersion des Polyesterharzes emulgiert wird.

Die so erhaltenen erfindungsgemäßen Beschichtungsmittel eignen sich für alle Einsatzgebiete, in denen lösemittelhaltige, lösemittelfreie oder andersartige wäßrige Anstrich- und Beschichtungssysteme mit einem erhöhten Eigenschaftsprofil Verwendung finden, z.B.: Beschichtung praktisch aller mineralischer Baustoff-Oberflächen wie Kalk- und/oder Zement gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier; Lackierung und Beschichtung metallischer Oberflächen; Beschichtung und Lackierung asphalt- oder bitumenhaltiger Straßenbeläge; Lackierung und Versiegelung diverser Kunststoffoberflächen; außerdem sind sie zur flächigen Verklebung diverser Werkstoffe geeignet, wobei gleichartige und unterschiedliche Werkstoffe miteinander verbunden werden. Bei den gemäß vorliegender Erfindung herzustellenden und zu verwendenden Lacken und Beschichtungsmassen handelt es sich um solche der unterschiedlichsten Art, wie beispielsweise Grundierungen, Füller, pigmentierte oder transparente Decklacke, die in der Einzel- und Serienapplikation im Bereich der Industrielackierung, Automobil-Erst- und -Reparaturlackierung Anwendung finden können.

Die Herstellung der Beschichtungen kann insbesondere nach den unterschiedlichsten Spritzverfahren wie beispielsweise Luftdruck-, Airless- oder Elektrostatik-Spritzverfahren unter Verwendung von Ein- oder Zweikomponenten-Spritzanlagen erfolgen.

Hieraus folgt, daß die Herstellung der gebrauchsfertigen Lacke und Beschichtungsmassen nicht nur wie oben dargelegt vorab sondern auch erst kurz vor der Herstellung der Überzüge unter Verwendung von Zweikomponenten-Mischaggregaten der aus der Lacktechnologie üblichen Art erfolgen kann, wobei die Komponente A) im allgemeinen die gegebenenfalls mitverwendeten Hilfs- und Zusatzmittel enthält und unmittelbar vor der Herstellung der Lackfilme mit der Zweitkomponente B) vermischt wird.

Die erfindungsgemäß herzustellenden und zu verwendenden Lacke und Beschichtungsmassen können jedoch auch nach anderen Methoden, beispielsweise durch Streichen, Rollen oder Rakeln appliziert werden.

Die Trocknung und Aushärtung der Beschichtungen erfolgt im allgemeinen unter normalen Temperaturbedingungen, d.h. ohne Erhitzung der Beschichtungen. Es ist jedoch auch hervorzuheben, daß die erfindungsgemäßen Bindemittelkombinationen ganz hervorragend zur Herstellung von Einbrennlacken oder -beschichtungsmassen geeignet sind, die nach ihrer Applikation bei 40-250 °C, vorzugsweise 60-180 °C eingebrannt, d.h. ausgehärtet werden. Als Substrate kommen hierbei alle hitzeresistenten Werkstoffe in Frage, wie beispielsweise Kunststoffe der unterschiedlichsten Art, diverse Hölzer und Holzwerkstoffe, Metalle, wie z.B. Eisen, Aluminium, Zink, verzinkter Stahl, u.dgl. oder mineralische Substrate der unterschiedlichsten Art. Diese Möglichkeit der Aushärtung bei erhöhten Temperaturen kommt einer Anwendung im Bereich der Serienlackierung bzw. Bandlackierung besonders entgegen.

In den nachfolgenden Beispielen beziehen sich alle Prozentangaben, falls nicht anders angegeben, auf Gewichtsprozente.

Beispiele

Ausgangsmaterialien:

Herstellung der Polyestervorstufen aI) bis aIV)

aI) In ein 6-l-Reaktionsgefäß mit Rühr-, Kühl- und Heizvorrichtung und Wasserabscheider werden 297 g Isononansäure, 1134 g Isophthalsäure, 1010 g Phthalsäureanhydrid, 929 g Pentaerythrit, 727 g 1,4-Dimethylolcyclohexan und 806 g 1,6-Hexandiol eingewogen und unter Durchleiten von Stickstoff in einer Stunde auf 140 °C aufgeheizt. Dann wird in 3 Stunden auf 150 °C und dann in 7 Stunden auf 220 °C aufgeheizt. Es wird so lange unter Wasserabspaltung kondensiert bis der Polyester aI) eine Gesamtsäurezahl von 2,9 und eine OH-Zahl von 270 aufweist.

aII) In einem 6-l-Reaktionsgefäß mit Rühr-, Kühl- und Heizvorrichtung und Wasserabscheider werden 1348 g Hexahydrophthalsäureanhydrid, 1757 g Trimethylolpropan und 1673 g eines gesättigten $C_{14}/C_{16}$-Fettsäuregemisches (®Prifrac 2950, Unichema International) eingewogen und unter Durchleiten von Stickstoff in einer Stunde auf 140 °C und dann in 8 Stunden auf 220 °C erhitzt. Es wird so lange unter Wasserabspaltung kondensiert, bis der Polyester aII) eine Gesamtsäurezahl von 2,0 und eine OH-Zahl

von 185 aufweist.

aIII) In ein 6-l-Reaktionsgefäß mit Rühr-, Kühl-, Heizvorrichtung und Wasserabscheider werden 1341 g Hexahydrophthalsäureanhydrid, 875 g Trimethylolpropan, 1658 g ®Prifrac 2950 (Unichema International) und 888 g Pentaerythrit eingewogen und unter Stickstoff-Durchleiten in einer Stunde auf 140 °C, dann in 8 Stunden auf 220 °C erhitzt. Es wird so lange unter Wasserabspaltung kondensiert, bis der Polyester aIII) eine Gesamtsäurezahl von 3,1 und eine OH-Zahl von 270 aufweist.

aIV) In ein 15-l-Reaktionsgefäß mit Rühr-, Kühl-, Heizvorrichtung und Wasserabscheider werden 1481 g Trimethylolpropan, 5226 g 1,6-Hexandiol, 819 g Phthalsäureanhydrid, 1615 g Adipinsäure und 4595 g Isophthalsäure eingewogen und unter Durchleiten von Stickstoff in 7 Stunden auf 250 °C aufgeheizt. Es wird so lange unter Wasserabspaltung kondensiert, bis der Polyester aIV) eine Gesamtsäurezahl von 1,2 und eine OH-Zahl von 152 aufweist.

Herstellung der wäßrigen Bindemittelkomponente A)

$A_1$ In einem 5-l-Reaktionsgefäß mit Rühr-, Kühl- und Heizvorrichtung werden 1020 g Polyestervorstufe aI), 87 g Dimethylolpropionsäure und 2000 g trockenes Aceton eingewogen und auf 58 °C erwärmt und homogenisiert. Anschließend werden 1,5 g Zinn(II)octoat und dann 280 g Isophorondiisocyanat zugegeben. Die Reaktionsmischung wird so lange unter Rückfluß gerührt, bis der NCO-Wert <0,05 beträgt.

Dann werden zusammen 31 g Ammoniak (30 %ig in Wasser) und 1564 g Wasser zugegeben. Anschließend wird das Aceton im Vakuum (25 bis 100 mbar, Badtemperatur 40 bis 60 °C) vollständig abdestilliert und durch Zugabe von Wasser auf einen Festgehalt von ca. 32,2 % eingestellt. Das Urethan-, Carboxylat- und Hydroxylgruppen aufweisende Polyesterbindemittel $A_1$) hat eine Hydroxylzahl von ca. 130, eine Säurezahl von ca. 29 und einen Urethangruppengehalt von ca. 10,7 Gew.-%. Der Neutralisationsgrad ist ca. 80 %, die Viskosität ist ca. 500 mPa.s bei 23 °C.

$A_2$ Wie bei der Herstellung von $A_1$ beschrieben, werden 1118 g Polyestervorstufe aII), 67,5 g Dimethylolpropionsäure und 22,5 g Neopentylglykol in 1227 g Aceton mit einem Gemisch aus 180 g Isophorondiisocyanat und 112,5 g Hexamethylendiisocyanat in Gegenwart von 1,9 g Zinn(II)octoat zur Reaktion gebracht. Anschließend werden 14,1 g Ammoniak (30 %ig) und 1750 g entmineralisiertes Wasser zugegeben und das Aceton abdestilliert. Das so erhaltene Urethan-, Carboxylat- und Hydroxylgruppen aufweisende Polyesterbindemittel $A_2$ hat eine Hydroxylzahl von ca. 85, eine Säurezahl von ca. 22 und einen Urethangruppengehalt von ca. 11,5 Gew.-%. Der Neutralisationsgrad ist ca. 50 %, die Viskosität ca. 200 mPa.s bei 23 °C, der Festgehalt ca. 46 %.

$A_3$ Wie bei der Herstellung von $A_1$ beschrieben, werden 1014 g Polyestervorstufe aIII), 85,4 g Dimethylolpropionsäure und 301 g Isophorondiisocyanat in Gegenwart von 1,5 g Zinn(II)octoat in 2000 g Aceton zur Reaktion gebracht. Anschließend werden 10 g Ammoniak (30 %ig), 10 g Dimethylethanolamin und 1500 g Wasser zugegeben und das Aceton abdestilliert.

Das Urethan-, Carboxylat- und Hydroxylgruppen aufweisende Polyesterbindemittel $A_3$ hat eine Hydroxylzahl von ca. 120, eine Säurezahl von ca. 28 und einen Urethangruppengehalt von ca. 11,5 Gew.-%. Der Neutralisationsgrad ist ca. 40 %, die Viskosität ist ca. 200 mPa.s bei 23 °C, der Festgehalt beträgt ca. 44 Gew.-%.

$A_4$ In einem 12-l-Reaktionsgefäß mit Rühr-, Kühl- und Heizvorrichtung werden 3000 g Polyestervorstufe aII), 259 g Dimethylolpropionsäure, 609 g Diethylenglykoldimethylether und 2 g Zinn(II)octoat unter Stickstoffatmosphäre vorgelegt, auf 135 °C aufgeheizt und 1 Stunde homogenisiert, Nach Abkühlen auf 110 °C werden 813 g Isophorondiisocyanat in 15 Minuten zudosiert und die Reaktionsmischung bei 130 °C umgesetzt, bis keine freien NCO-Gruppen mehr nachweisbar sind. Anschließend werden 40,7 g ethoxyliertes Nonylphenol (Emulgator NP 20, Bayer AG) zugegeben und 15 Minuten homogenisiert. Die so erhaltene Harzschmelze wird dann in einem auf 50 °C erwärmten Gemisch aus 4995 g Wasser und 91 g Dimethylethanolamin dispergiert. Die Mischtemperatur beträgt ca. 65 °C, nach 2 Stunden wird das Produkt dann filtriert. Das Urethan-, Carboxylat- und Hydroxylgruppen enthaltende Polyesterharz $A_4$ hat eine Hydroxylzahl von ca. 90, eine Säurezahl von ca. 31 und einen Urethangruppengehalt von ca. 10,5 Gew.-%. Der Neutralisationsgrad ist ca. 55 %, die Viskosität ist ca. 500 mPa.s bei 23 °C, der Festgehalt beträgt ca. 40 %.

$A_5$ Wie bei der Herstellung von $A_1$ beschrieben, werden 1001 g Polyestervorstufe aII), 84 g Dimethylolpropionsäure in 2000 g Aceton mit 315 g Isophorondiisocyanat in Gegenwart von 1,5 g Zinn(II)octoat zur Reaktion gebracht. Anschließend werden 21,5 g Ammoniak (30 %ig) und 1600 g entmineralisiertes Wasser zugegeben und das Aceton abdestilliert.

Das Urethan-, Carboxylat- und Hydroxylgruppen aufweisende Polyesterbindemittel $A_5$ hat eine Hydroxylzahl von ca. 70, eine Säurezahl von ca. 29 und einen Urethangruppengehalt von ca. 12,0 Gew.-

%. Der Neutralisationsgrad ist ca. 70 %, die Viskosität ist ca. 1600 mPa.s bei 23 °C, der Festgehalt beträgt 47,6 %.

$A_6$ Wie bei der Herstellung von $A_1$ beschrieben, werden 1140 g Polyestervorstufe aII), 75 g Dimethylolpropionsäure in 1227 g Aceton mit einem Gemisch aus 150 g Isophorondiisocyanat und 135 g eines Isocyanuratgruppen aufweisenden Polyisocyanats auf Basis von Hexamethylendiisocyanat mit einem NCO-Gehalt von ca. 21,5 % in Gegenwart von 1,9 g Zinn(II)octoat zur Reaktion gebracht. Anschließend werden 14,5 g Ammoniak (30 %ig) und 1830 g demineralisiertes Wasser zugegeben und das Aceton abdestilliert. Das Urethan-, Carboxylat- und Hydroxylgruppen aufweisende Polyesterbindemittel $A_6$ hat eine Hydroxylzahl von ca. 105, eine Säurezahl von ca. 24 und einen Urethangruppengehalt von ca. 8, 1 Gew.-%. Der Neutralisationsgrad ist ca. 50 %, die Viskosität ca. 100 mPa.s bei 23 °C, der Festkörpergehalt ca. 40 %.

$A_7$ Wie bei der Herstellung von $A_1$ beschrieben, werden 1170 g Polyestervorstufe aIV) und 60 g Dimethylolpropionsäure in 1227 g Aceton mit 270 g Bis-(4-isocyanatocyclohexyl)methan in Gegenwart von 1,9 g Zinn(II)octoat zur Reaktion gebracht. Anschließend werden 11,5 g Ammoniak (30 %ig) und 1830 g entmineralisiertes Wasser zugegeben und das Aceton abdestilliert, Das Urethan-, Carboxylat- und Hydroxylgruppen aufweisende Polyesterbindemittel $A_7$ hat eine Hydroxylzahl von ca. 80, eine Säurezahl von ca. 19 und einen Urethangruppengehalt von ca. 7,2 Gew.-%. Der Neutralisationsgrad ist ca. 50 %, die Viskosität ca. 200 mPa.s bei 23 °C, der Festgehalt beträgt ca. 45 %.

## Polyisocyanate B)

### Polyisocyanat B1

Gemisch aus 70 Gew.-Teilen eines Uretdiongruppen aufweisenden, also dimerisierten Hexamethylendiisocyanats mit zwei endständigen, freien NCO-Gruppen und 30 Gew.-Teilen des im wesentlichen zum N,N',N''-Tris(6-isocyanatohexyl)-isocyanurat trimerisierten Hexamethylendiisocyanates im Gemisch mit untergeordneten Mengen an höheren Homologen beider Produkte. Polyisocyanat B1 besitzt in seiner 100 %igen, also lösemittelfreien Lieferform eine durchschnittliche Viskosität von 150 mPa.s/23 °C und einen durchschnittlichen Gehalt an freien NCO-Gruppen von 22,5 %.

### Polyisocyanat B2

N,N',N''-Tris(6-isocyanatohexyl)-biuret mit untergeordneten Mengen seiner höheren Homologen. Das 100 %ige Produkt weist einen durchschnittlichen NCO-Gehalt von 22,5 Gew.-% und eine durchschnittliche Viskosität von ca. 3000 mPa.s/23 °C auf.

## Beispiel 1

100 Gew.-Teile des Produktes $A_1$ mit einem Festkörpergehalt von 32,2 Gew.-% in Wasser, einer Viskosität von 500 mPa.s bei 23 °C, einem pH-Wert von 7,0 und einer Hydroxylzahl von ca. 130 bezogen auf den Festkörper werden mit 20,0 Gew.-Teilen destilliertem Wasser verdünnt. Anschließend werden 0,8 g einer 20,0 Gew.-% Wirkstoff enthaltenden Lösung eines handelsüblichen Polyurethanverdickers (Acrysol RM8 der Fa. Rohm und Haas, Frankfurt am Main), in Wasser/i-Propanol = 1/1 sowie 0,64 Gew.-Teile eines handelsüblichen Emulgators (25 %ige Lösung in dest. Wasser eines ethoxylierten Phenols, "Emulgator WN", Hersteller: Bayer AG) zugesetzt. Man erhält somit die Stammkomponente (bzw. Polyesterkomponente) für einen wasserverdünnbaren Zweikomponenten-Polyurethan-Klarlack.

Die Lagerstabilität dieser Stammkomponente ist praktisch unbegrenzt.

Je nach gewünschtem Vernetzungsgrad werden nun

a. NCO/OH = 1,5 : 21,69 Gew.-Teile
b. NCO/OH = 2,0 : 28,92 Gew.-Teile
c. NCO/OH = 3,0 : 43,38 Gew.-Teile

Polyisocyanat B1 zugesetzt und homogenisiert.

Man erhält auf diese Weise verarbeitungsfertige wasserverdünnbare Zweikomponenten-Polyurethan-Klarlacke, die sich wie folgt zusammensetzen:

| | Gew.-% | | |
|---|---|---|---|
| | a. | b. | c. |
| Bindemittel:<br>Additive (fest): | 37,66<br>0,22 | 40,65<br>0,21 | 45,86<br>0,19 |
| Gesamtfeststoff:<br>Wasser:<br>Organische Löser: | 37,88<br>61,90<br>0,22 | 40,86<br>58,93<br>0,21 | 46,05<br>53,76<br>0,19 |
| Gesamt: | 100,00 | 100,00 | 100,00 |

Die verarbeitungsfertigen Ansätze enthalten nur noch sehr geringe Anteile organischer Lösemittel und zwar um 0,2 Gew.-%. Die Gelierzeit der verarbeitungsfertigen Ansätze beträgt 6 bis 7 Stunden. Filme, die mit einer Naßfilmdicke von 200 µm appliziert wurden (entsprechend einer Trockenfilmdicke von 50 bis 60 µm) trocknen innerhalb von 4 bis 6 Stunden bei Raumtemperatur zu kleb- und störungsfreien Filmen auf, Der Härtungsprozeß der aufgetragenen Filme ist nach 7 bis 14 Tagen vollständig abgeschlossen. Die Eigenschaften der applikationsfertigen Lacke sowie der gehärteten daraus hergestellten Filme können wie folgt zusammengefaßt werden:

| | a. | b. | c. |
|---|---|---|---|
| Gelierzeit des Flüssiglackes | 7 h | 7 h | 7 h |
| Griffestigkeit der Filme | 4-6 h | 4-6 h | 4-6 h |
| Pendelhärte (Albert/König) | ca. 200" | ca. 200" | ca. 200" |
| Lösemittelbeständigkeit | | | |
| Testbenzin: | sehr gut | sehr gut | sehr gut |
| Solventnaphtha 100: | sehr gut | sehr gut | sehr gut |
| Methoxypropylacetat: | gut | gut | sehr gut |
| Aceton: | gut-mäßig | gut-mäßig | gut-mäßig |
| Ethanol: | gut | gut | gut |

Beispiel 2

Beispiel 1 wird wiederholt mit dem Unterschied, daß in Parallelversuchen hergestellte Lackfilme mit einer Naßfilmdicke von 200 µm (Substrat: Glasplatten) während 60 min bei 80 °C, 30 min bei 120 °C bzw. 15 min bei 160 °C eingebrannt werden In allen Fällen resultieren Lackfilme, deren Eigenschaften den Lackfilmen gemäß Beispiel 1 entsprechen.

Beispiel 3

100 Gew.-Teile des Produktes $A_5$ mit einem Festkörpergehalt von 47,6 Gew.-% in Wasser, einer Viskosität von 1600 mPa.s bei 23 °C, einem pH-Wert von 7,2 und einer Hydroxylzahl von ca. 70 bezogen auf den Festkörpergehalt werden mit 1,19 Gew.-Teilen der Verdickerlösung gemäß Beispiel 1 und 0,95 Gew.-Teilen der Emulgatorlösung gemäß Beispiel 1 gemischt. Anschließend wird der Ansatz mit 20 Gew.-Teilen destilliertem Wasser verdünnt. Man erhält so eine für die Vernetzung mit Polyisocyanaten geeignete

wasserverdünnbare Polyhydroxy-Komponente mit praktisch unbegrenzter Lagerstabilität.

Nach Zusatz von 31,35 Gew.-Teilen einer 75 gew.-%igen Lösung von Polyisocyanat B2 in Methoxypropylacetat/Xylol = 1/1 erhält man einen wasserverdünnbaren, verarbeitungsfertigen Zweikomponenten-Polyurethan-Klarlack folgender erfindungsgemäßer Zusammensetzung:

Zusammensetzung:

| | |
|---|---|
| Bindemittelgehalt: | 46,14 Gew.-% |
| Hilfsmittel | 0,48 Gew.-% |
| Gesamtfestkörper: | 46,62 Gew.-% |
| Organische Löser: | 5,42 Gew.-% |
| Wasser: | 47,96 Gew.-% |
| Gesamt: | 100,00 Gew.-% |

Der verarbeitungsfertige Ansatz enthält 5,42 Gew.-% organische Lösemittel. Das Verhältnis von NCO/OH-Gruppen beträgt 2. Die Gelierzeit des verarbeitungsfertigen Ansatzes beträgt 4 bis 5 Stunden. Filme, die mit einer Naßfilmdicke von 200 µm (entsprechend einer Trockenfilmdicke von 50 bis 60 µm) aufgetragen werden, trocknen innerhalb von 3 bis 4 Stunden zu einem kleb- und störungsfreien Film auf. Der Härtungsprozeß ist nach 7 bis 14 Tagen vollständig abgeschlossen. Der gehärtete Film hat dann folgendes Eigenschaftsbild:

| | |
|---|---|
| Pendelhärte: | ca. 150 - 170 sec. |
| Lösemittelbeständigkeit: | |
| Testbenzin: | sehr gut |
| Solventnaphtha: | sehr gut |
| Methoxypropylacetat: | gut |
| Aceton: | gut |
| Ethanol: | gut |

Beispiel 4

100 Gew.-Teile des Produktes $A_3$ mit einem Festkörpergehalt von 44 Gew.-% in Wasser, einer Viskosität von 200 mPa.s bei 23 °C einem pH-Wert von 7,0 und einem Hydroxylgehalt von 3,6 % bezogen auf den Festkörper werden mit 28 Gew.-Teilen destilliertem Wasser verdünnt.

Man setzt nun 1,10 Gew.-Teile Verdickerlösung 20 %ig und 0,88 Gew.-Teile Emulgatorlösung 25 %ig zu (beide Additive gemäß Beispiel 1) und verteilt gleichmäßig durch bloßes Einrühren. Man erhält somit die Polyol- oder Stammkomponente für die Umsetzung mit Polyisocyanaten für ein wasserverdünnbares Zweikomponenten-Polyurethan-Reaktionssystem mit praktisch unbegrenzter Lagerstabilität.

Nach Zugabe von 29,71 Gew.-Teilen Polyisocyanat B1 erhält man einen wasseverdünnbaren, verarbeitungsfertigen Zweikomponenten-Polyurethanlack, der sich wie folgt erfindungsgemäß zusammensetzt:

| | |
|---|---|
| Bindemittelgehalt: | 46,22 Gew.-% |
| Additive: | 0,27 Gew.-% |
| Gesamtfestkörper: | 46,49 Gew.-% |
| Wasser: | 53,23 Gew.-% |
| Organische Löser: | 0,28 Gew.-% |
| Gesamt: | 100,00 Gew.-% |

Der verarbeitungsfertige Ansatz enthält also nur 0,28 Gew.-% organische Lösemittel Das Verhältnis von NCO/OH-Gruppen beträgt 2. Die Gelierzeit des verarbeitungsfertigen Ansatzes liegt bei ca. 6 bis 7 Stunden.

Filme, die mit einer Naßfilmstärke von 200 µm (entsprechend einer Trockenfilmdicke von 50 bis 60 µm) aufgerakelt werden, trocknen innerhalb von 4 bis 5 Stunden zu einem kleb- und störungsfreien Film auf. Der Härtungsprozeß ist nach 7 bis 14 Tagen vollständig abgeschlossen. Der gehärtete Film hat dann folgendes Eigenschaftsbild:

| | |
|---|---|
| Pendelhärte: | ca. 160 sec. |
| Lösemittelbeständigkeit: | |
| Testbenzin: | sehr gut |
| Solventnaphtha 100: | sehr gut |
| Methoxypropylacetat: | sehr gut |
| Aceton: | gut |
| Ethanol: | gut |

Beispiel 5

100 Gew.-Teile des Produktes $A_4$ mit einem Festkörpergehalt von 40 Gew.-% in Wasser/Diethylenglykol-dimethylether/Diethylethanolamin = 53/6/1 mit einer Viskosität von 500 mPa.s bei 23 °C, einem pH-Wert von 7,0 und einer Hydroxylzahl von ca. 90 bezogen auf den Festkörpergehalt der Zubereitung werden mit 8,3 Gew.-Teilen destilliertem Wasser verdünnt. Anschließend setzt man 0,83 Gew.-Teile der Emulgatorlösung gemäß Beispiel 1 und 0,34 Gew.-Teile der Verdickerlösung gemäß Beispiel 1 zu und verrührt den Ansatz. Nun erfolgt Zugabe und Einrühren von 54,8 Gew.-Teilen eines Rutil-Titandioxides (Bayertitan R-KB-4 der Bayer AG, Leverkusen). Dieser Ansatz wird nun per Schnellrührer mit Dispergierscheibe bei einer Drehgeschwindigkeit von 15 bis 20 m/sec. dispergiert. Man erhält so einen für die Vernetzung mit Polyisocyanaten geeigneten, pigmentierten Stammansatz (Polyol-Komponente) der wasserverdünnbar ist und über praktisch unbegrenzte Lagerstabilität verfügt. Nach Zugabe und Einrühren von 27,02 Gew.-Teilen Polyisocyanat B1 (100 %ige Lieferform) erhält man einen wasserverdünnbaren, verarbeitungsfertigen, weißpigmentierten Zweikomponenten-Polyurethanlack mit folgender erfindungsgemäßer Zusammensetzung:

| | |
|---|---|
| Bindemittelgehalt: | 35,10 Gew.-% |
| Additive: | 0,11 Gew.-% |
| Pigment: | 28,70 Gew.-% |
| Gesamt-Festkörper | 63,91 Gew.-% |
| Wasser | 32,26 Gew.-% |
| Organische Löser | 3,83 Gew.-% |
| | 100,00 Gew.-% |

Der verarbeitungsfertige Ansatz enthält nur noch 3,83 Gew.-% organische Lösemittel. Das Verhältnis von NCO/OH-Gruppen beträgt 2. Die Gelierzeit des verarbeitungsfertigen Ansatzes liegt bei 6 bis 8 Stunden.

Filme, die in einer Naßfilmdicke von 200 µm (entsprechend einer Trockenfilmdicke von ca. 60 µm) aufgerakelt wurden, trocknen über Nacht zu klebfreien Filmen auf, Der Härtungsprozeß ist nach 7 bis 14 Tagen vollständig abgeschlossen, der gehärtete Weißlackfilm hat dann folgende Eigenschaften:

| | |
|---|---|
| Glanz (Gardner 60°): | 80 - 85 |
| Pendelhärte (Albert/König) | ca. 150 Sek. |
| Löserbeständigkeit: | |
| Testbenzin: | sehr gut |
| Solventnaphta 100: | sehr gut |
| Methoxypropylacetat: | sehr gut |
| Aceton: | gut-mäßig |
| Ethanol: | gut-mäßig |

Beispiel 6

Beispiel 5 wird wiederholt, wobei in Parallelversuchen verschiedene Lackfilme mit einer Naßdilmdicke von 200 µm während 1 Stunde bei 80 °C, während 30 min bei 120 °C bzw. während 15 min bei 160 °C ausgehärtet werden. Auch hier resultieren Lackfilme, deren Eigenschaften den Lackfilmen gemäß Beispiel 5 entsprechen.

Beispiele 7 bis 9

Wie im Beispiel 1 beschrieben, wurde mit dem Polyisocyanat B1 in Kombination mit den Produkten

$A_2$ → Beispiel 7,
$A_6$ → Beispiel 8,
$A_7$ → Beispiel 9,

wasserverdünnbare Zweikomponenten-Polyurethanlacke hergestellt. Das NCO/OH-Verhältnis wurde dabei mit 1,2:1 gewählt. Die Kombinationen wiesen Standzeiten zwischen 5 und 8 Stunden auf, mit 150 µm Naßfilmstärke (≙ 30 - 40 µm Trockenfilmstärke) aufgezogene Filme trockneten nach 3 bis 5 Stunden klebfrei auf.

Nach 7 Tagen Trocknung bei Raumtemperatur wurden die Überzüge einem MIBK-Wischtest unterzogen. Dabei wurden 100 Doppelhübe mit einem mit MIBK-getränkten Wattebausch durchgeführt. Bei allen 3 Filmen konnten dabei keine Veränderungen festgestellt werden.

Ein Test auf Wasserbeständigkeit durch Belastung von ausgehärteten Filmen mit einem mit Wasser getränkten Wattebausch ergab nach 48 Stunden Belastung keine sichtbare Veränderung.

**Patentansprüche**

**1.** Wäßrige Bindemittelkombination bestehend im wesentlichen aus

A) einer wäßrigen Lösung oder Dispersion mit einem Festkörpergehalt von 25 bis 65 Gew.-% und einem Gehalt an organischen Lösungsmitteln von unter 8 Gew.-% einer wasserverdünnbaren organischen Polyolkomponente und

B) einer Polyisocyanatkomponente einer Viskosität bei 23 °C von 50 bis 10 000 mPa.s, bestehend aus mindestens einem organischen Polyisocyanat, welche in der Komponente A) emulgiert vorliegt, wobei das NCO/OH-Äquivalentverhältnis, bezogen auf die Isocyanatgruppen der Komponente B) und die Hydroxylgruppen der in A) vorliegenden Polyolkomponente bei 0,5:1 bis 5:1 liegt,

dadurch gekennzeichnet, daß die in A) vorliegende Polyolkomponente aus mindestens einem Urethan-, Carboxylat- und Hydroxylgruppen aufweisenden Polyesterharz besteht.

**2.** Wäßrige Bindemittelkombination gemäß Anspruch 1, dadurch gekennzeichnet, daß das Polyesterharz der Bindemittelkomponente A) ein Molekulargewicht $\overline{M}_w$ von 3000 bis 100 000, eine Hydroxylzahl von 20 bis 240 mg KOH/g Substanz, eine Säurezahl von 10 bis 45 mg KOH/g Substanz, wobei 25 bis 100 % der diese Säurezahl bewirkenden Carboxylgruppen in Carboxylatform vorliegen, und einen Urethangruppengehalt von 2,5 bis 15,0 Gew.-% aufweist, wobei die Werte für Hydroxylzahl, Säurezahl und Urethangruppengehalt sich jeweils auf 100 % Festharz beziehen und wobei die Komponente A) als 15 bis 65 gew.-%ige wäßrige Lösung, mit einer Viskosität bei 23 °C von 10 bis 30 000 mPa.s und einem pH-Wert von 5 bis 10 vorliegt.

**3.** Wäßrige Bindemittelkombination gemäß Anspruch 1 und 2, dadurch gekennzeichnet, daß das Polyesterharz der Bindemittelkomponente A) das Umsetzungsprodukt von

a) 65 bis 92 Gew.-% eines Polyesterpolyols mit einer Hydroxylzahl von 50 bis 500 und einer Säurezahl ≦6,

b) 0 bis 7 Gew.-% eines Diols des Molekulargewichtsbereichs von 62 bis 240,

c) 2,5 bis 7,5 Gew.-% einer 2,2-Bis(hydroxymethyl)alkancarbonsäure oder einer dieser Säuremenge entsprechende Menge eines t-Aminsalzes einer solchen Säure und

d) 8 bis 30 Gew.-% mindestens einer, mindestens difunktionellen Isocyanatkomponente des Molekulargewichtsbereichs 168 bis 2000 darstellt,

wobei sich die zu a) bis d) gemachten Prozentangaben zu 100 % ergänzen.

**4.** Wäßrige Bindemittelkombination gemäß Ansprüchen 1 bis 3, dadurch gekennzeichnet, daß das in der Polyesterharzkomponente chemisch gebunden vorliegende Polyesterpolyol a) das Umsetzungsprodukt von

$a_1$) 0 bis 60 Gew.-% Monocarbonsäuren mit 6 bis 22 Kohlenstoffatomen,

$a_2$) 10 bis 65 Gew.-% Di- und/oder Tricarbonsäuren bzw. deren Anhydride,

$a_3$) 15 bis 70 Gew.-% di- und/oder höherfunktionelle Alkohole,

$a_4$) 0 bis 30 Gew.-% Monoalkohole,

$a_5$) 0 bis 15 Gew.-% Hydroxycarbonsäuren, Lactone, Aminoalkohole und/oder Aminocarbonsäuren darstellt,

wobei sich die zu $a_1$) bis $a_5$) gemachten Prozentangaben zu 100 % ergänzen.

**5.** Wäßrige Bindemittelkombination gemäß den Ansprüchen 1 bis 4, dadurch gekennzeichnet, daß das Polyesterharz der Komponente A) ein Molekulargewicht $\overline{M}_w$ von 6000 bis 50 000, eine Hydroxylzahl von 45 bis 190 mg KOH/g Substanz, eine Säurezahl von 14 bis 33 mg KOH/g Substanz, wobei 40 bis 100 % der diese Säurezahl bewirkenden Carboxylgruppen in Carboxylatform vorliegen und einen Urethangruppengehalt von 5,0 bis 12,5 Gew.-% aufweist, wobei die Werte für Hydroxylzahl, Säurezahl und Urethangruppengehalt sich jeweils auf 100 % Feststoff beziehen und wobei die Komponente A) das Umsetzungsprodukt von

a) 70 bis 87 Gew.-% eines Veresterungsprodukts mit einer Hydroxylzahl von 80 bis 350 und einer Säurezahl ≦4 aus

$a_1$) 0 bis 55 Gew.-% Monocarbonsäuren mit 7 bis 20 Kohlenstoffatomen,

$a_2$) 13 bis 56 Gew.-% Di- und/oder Tricarbonsäuren bzw. deren Anhydride und

$a_3$) 25 bis 63 Gew.-% di- und/oder höherfunktionelle Alkohole,

wobei sich die Prozentsätze zu $a_1$) bis $a_3$) zu 100 % ergänzen,

b) 0 bis 3 Gew.-% eines Diols des Molekulargewichtsbereichs von 62 bis 240,

c) 3,0 bis 6,5 Gew.-% Dimethylolpropionsäure bzw. einer dieser Säuremenge entsprechenden Menge eines t-Aminsalzes dieser Säure und

d) 10 bis 23 Gew.-% mindestens einer, mindestens difunktionellen Isocyanatkomponente des Molekulargewichtsbereichs 168 bis 2000 ist, und wobei sich die zu a) bis d) gemachten Prozentangaben zu 100 % ergänzen,

und die Polyisocyanatkomponente B) aus einem oder mehreren organischen Polyisocyanaten mit ausschließlich (cyclo)aliphatisch gebundenen Isocyanatgruppen besteht.

**6.** Verfahren zur Herstellung von Beschichtungsmitteln mit einem max. Lösungsmittelgehalt von 20 Gew.-%, die aus einer wäßrigen Bindemittelkombination und gegebenenfalls aus der Lacktechnologie bekannten Hilfs- und Zusatzmitteln bestehen, dadurch gekennzeichnet, daß man in eine wäßrige Lösung oder Dispersion von Urethan-, Carboxylat- und Hydroxylgruppen enthaltenden Polyesterharzen eine Polyisocyanatkomponente einer Viskosität bei 23° C von 50 bis 10 000 mPa.s, bestehend aus mindestens einem organischen Polyisocyanat, welches gegebenenfalls in Abmischung mit geringen Mengen an inerten Lösungsmitteln zum Einsatz gelangt, emulgiert, wobei die Mengenverhältnisse der beiden Komponenten einem NCO/OH-Äquivalent-verhältnis, bezogen auf die Isocyanatgruppen der Polyisocyanatkomponente und die Hydroxylgruppen des Polyesterharzes, von 0,5 : 1 bis 5 : 1 entsprechen, und wobei die gegebenenfalls mitverwendeten Hilfs- und Zusatzstoffe der Urethan-, Carboxylat- und Hydroxylgruppen enthaltenden Polyesterharzlösung bzw. -dispersion vor der Zugabe der Polyisocyanatkomponente einverleibt worden sind.

**7.** Verfahren gemäß Anspruch 6, dadurch gekennzeichnet, daß man
in einem ersten Reaktionsschritt ein Urethan-, Carboxylat- und Hydroxylgruppen aufweisendes Polyesterharz mit einem Molekulargewicht Mw von 3000 bis 100 000, einer Hydroxylzahl von 20 bis 240, einer Säurezahl von 10 bis 45 und einem Urethangruppengehalt von 2,5 bis 15,0 Gew.-% durch Umsetzung bei 40 bis 140°C in 40 bis 99-gew.-%iger organischer Lösung von

a) 65 bis 92 Gew.-% eines Polyesterpolyols mit einer Hydroxylzahl von 50 bis 500 und einer Säurezahl ≦6,

b) 0 bis 7 Gew.-% eines Diols des Molekulargewichtsbereichs von 62 bis 240,

c) 2,5 bis 7,5 Gew.-% einer 2,2-Bis(hydroxymethyl)-alkancarbonsäure, oder einer dieser Säuremenge entsprechenden Menge eines t-Aminsalzes einer solchen Säure und

d) 8 bis 30 Gew.-% mindestens einer mindestens difunktionellen Isocyanatkomponente des Molekulargewichtsbereichs 168 bis 2000

herstellt, anschließend
in einem zweiten Reaktionsschritt das so erhaltene Polyesterharz in Wasser löst oder dispergiert, wobei gegebenenfalls vor und/oder während dieses Schritts 25 bis 100 % der gegebenenfalls vorliegenden Carboxylgruppen durch Neutralisation in Carboxylatgruppen überführt werden, und wobei gegebenenfalls das organische Hilfslösungsmittel vor und/oder während und/oder nach der Herstellung der wäßrigen Lösung oder Dispersion ganz oder teilweise aus dem Reaktionsgemisch destillativ entfernt wird, und wobei schließlich
in einem dritten Reaktionsschritt, gegebenenfalls nach Zusatz von Hilfs- und Zusatzmitteln, die Polyisocyanatkomponente in der so erhaltenen wäßrigen Lösung oder Dispersion des Polyesterharzes emulgiert wird.

**8.** Verwendung von Bindemittelkombinationen gemäß Anspruch 1 bis 4 als Bindemittel für Lacke, Beschichtungs- oder Dichtmassen.

**9.** Verwendung gemäß Anspruch 8 als Bindemittel für bei 40 - 250°C auszuhärtenden Lacken oder Beschichtungsmassen.

10. Verwendung gemäß Anspruch 8 und 9 als Bindemittel in bei 80 - 160 °C auszuhärtenden Lacken oder Beschichtungsmassen.

## Claims

1. An aqueous vehicle combination consisting substantially of
   A) an aqueous solution or dispersion, having a solids content of 25 to 65 weight % and a content of organic solvents of less than 8 weight %, of a water-thinnable organic polyol component, and
   B) a polyisocyanate component having a viscosity at 23 °C of 50 to 10,000 mPa.s, consisting of at least one organic polyisocyanate which is present in an emulsified state in component A), wherein the NCO/OH equivalent ratio with respect to the isocyanate groups of component B) and the hydroxyl groups of the polyol component present in A) is 0.5:1 to 5:1,

   characterised in that the polyol component present in A) consists of at least one polyester resin containing urethane, carboxylate and hydroxyl groups.

2. An aqueous vehicle combination according to claim 1, characterised in that the polyester resin of vehicle component A) has a molecular weight Mw of 3000 to 100,000, a hydroxyl number of 20 to 240 mg KOH/g of substance, and an acid number of 10 to 45 mg KOH/g of substance, wherein 25 to 100% of the carboxyl groups which give rise to this acid number exist in carboxylate form, and the polyester resin has a urethane group content of 2.5 to 15.0 weight %, wherein the values for the hydroxyl number, the acid number and the urethane group content are each based on 100% of solid resin, and wherein component A) is present as a 15 to 65 weight % aqueous solution having a viscosity at 23 °C of 10 to 30,000 mPa.s and a pH of 5 to 10.

3. An aqueous vehicle combination according to claims 1 and 2, characterised in that the polyester resin of vehicle component A) constitutes the reaction product of
   a) 65 to 92 weight % of a polyester polyol having a hydroxyl number of 50 to 500 and an acid number ≦ 6,
   b) 0 to 7 weight % of a diol with a molecular weight range from 62 to 240,
   c) 2.5 to 7.5 weight % of a 2,2-bis(hydroxymethyl)alkanecarboxylic acid or an amount of a t-amine salt of such an acid corresponding to this amount of acid, and
   d) 8 to 30 weight % of at least one isocyanate component, which is at least difunctional, with a molecular weight range from 168 to 2000,

   wherein the percentages cited in a) to d) add up to 100 %

4. An aqueous vehicle combination according to claims 1 to 3, characterised in that the polyester polyol a) which is present in chemically bonded form in the polyester resin component constitutes the reaction product of
   $a_1$) 0 to 60 weight % of monocarboxylic acids with 6 to 22 carbon atoms,
   $a_2$) 10 to 65 weight % of di- and/or tricarboxylic acids or their anhydrides,
   $a_3$) 15 to 70 weight % of difunctional alcohols and/or alcohols of higher functionality,
   $a_4$) 0 to 30 weight % of monohydric alcohols,
   $a_5$) 0 to 15 weight % of hydroxycarboxylic acids, lactones, amino alcohols and/or aminocarboxylic acids,

   wherein the percentages cited in $a_1$) to $a_5$) add up to 100%.

5. An aqueous vehicle combination according to claims 1 to 4, characterised in that the polyester resin of component A) has a molecular weight Mw of 6000 to 50,000, a hydroxyl number of 45 to 190 mg KOH/g of substance, and an acid number of 14 to 33 mg KOH/g of substance, wherein 40 to 100% of the carboxyl groups giving rise to this acid number are present in carboxylate form, and the polyester resin has a urethane roup content of 5.0 to 12.5 weight %, wherein the values for the hydroxyl number, the acid number and the urethane roup content are each based on 100% solid, and wherein component A) is the reaction product of
   a) 70 to 87 weight % of an esterification product having a hydroxyl number of 80 to 350 and an acid number ≦ 4 obtained from
      $a_1$) 0 to 55 weight % of monocarboxylic acids with 7 to 20 carbon atoms,
      $a_2$) 13 to 56 weight % of di- and/or tricarboxylic acids or their anhydrides, and

$a_3$) 25 to 63 weight % of difunctional alcohols and/or alcohols of higher functionality,
wherein the percentages in $a_1$) to $a_3$) add up to 100 %,
b) 0 to 3 weight % of a diol with a molecular weight range from 62 to 240,
c) 3.0 to 6.5 weight % of dimethylolpropionic acid or an amount of a t-amine salt of this acid corresponding to this amount of acid, and
d) 10 to 23 weight % of at least one isocyanate component, which is at least difunctional, with a molecular weight range from 168 to 2000, and wherein the percentages cited in a) to d) add up to 100 %,

and polyisocyanate component B) consists of one or more organic polyisocyanates having exclusively (cyclo)aliphatically bonded isocyanate groups.

**6.** A method of producing coating media having a maximum solvent content of 20 weight %, which consist of an aqueous vehicle combination and optionally of auxiliary process materials and additives known from lacquer technology, characterised in that a polyisocyanate component having a viscosity at 23 °C of 50 to 10,000 mPa.s and consisting of at least one organic polyisocyanate which is optionally used in admixture with small amounts of inert solvents, is emulsified in an aqueous solution or dispersion of polyester resins containing urethane, carboxylate and hydroxyl groups, wherein the quantitative ratios of the two components correspond to an NCO/OH equivalent ratio of 0.5:1 to 5:1 with respect to the isocyanate groups of the polyisocyanate component and the hydroxyl groups of the polyester resin, and wherein the auxiliary process materials and additives which are optionally used conjointly have been incorporated in the polyester resin solution or dispersion containing urethane, carboxylate and hydroxyl groups before the addition of the polyisocyanate component.

**7.** A method according to claim 6, characterised in that
in a first reaction step a polyester resin containing urethane, carboxylate and hydroxyl groups and having a molecular weight Mw of 3000 to 100,000, a hydroxyl number of 20 to 240, an acid number of 10 to 45 and a urethane group content of 2.5 to 15.0 weight % is prepared, at 40 to 140 °C in a 40 to 99 weight % organic solution, by the reaction of
a) 65 to 92 weight % of a polyester polyol having a hydroxyl number of 50 to 500 and an acid number ≤ 6,
b) 0 to 7 weight % of a diol with a molecular weight range from 62 to 240,
c) 2.5 to 7.5 weight % of a 2,2-bis(hydroxymethyl)-alkanecarboxylic acid or an amount of a t-amine salt of such an acid corresponding to this amount of acid, and
d) 8 to 30 weight % of at least one isocyanate component, which is at least difunctional, with a molecular weight range from 168 to 2000,
and
in a second reaction step the polyester resin which is thus obtained is dissolved or dispersed in water, wherein 25 to 100 % of the carboxyl groups which are optionally present are optionally converted into carboxylate groups by neutralisation before and/or during this step, and wherein the auxiliary organic solvent is optionally removed partly or completely from the reaction mixture by distillation before and/or during and/or after the preparation of the aqueous solution or dispersion, and wherein finally,
in a third reaction step, optionally after the addition of auxiliary process materials and additives, the polyisocyanate component is emulsified in the aqueous solution or dispersion of the polyester resin which is thus obtained.

**8.** The use of vehicle combinations according to claims 1 to 4 as vehicles for lacquers, coating compounds or sealing compounds.

**9.** A use according to claim 8 as vehicles for lacquers or coating compounds which are to be cured at 40 - 250 °C.

**10.** A use according to claims 8 and 9 as vehicles in lacquers or coating compounds which are to be cured at 80 - 160 °C.

## Revendications

**1.** Combinaison de liant aqueuse, constituée essentiellement par

A) une solution ou une dispersion aqueuse possédant une teneur en produits solides de 25 à 65% en poids et une teneur en solvants organiques inférieure à 8% en poids, d'un composant organique de polyol apte à être dilué dans l'eau, et

B) un composant de polyisocyanate possédant une viscosité à 23 °C de 50 à 10.000 mPa.s, constitué par au moins un polyisocyanate organique qui est présent en émulsion dans le composant A), dans lequel le rapport d'équivalent NCO/OH, rapporté aux groupes isocyanate du composant B) et aux groupes hydroxyle du composant de polyol présents dans A) se situe de 0,5:1 à 5:1,

caractérisée en ce que le composant de polyol présent dans A) est constitué par au moins une résine de polyester présentant des groupes uréthanne, carboxylate et hydroxyle.

**2.** Combinaison de liant aqueuse selon la revendication 1, caractérisée en ce que la résine de polyester du composant de liant A) possède un poids moléculaire $\overline{M}_w$ de 3000 à 100.000, un indice hydroxyle de 20 à 240 mg de KOH/g de substance, un indice d'acide de 10 à 45 mg de KOH/g de substance, dans laquelle, de 25 à 100% des groupes carboxyle réalisant cet indice acide sont présents sous la forme carboxylate, ainsi qu'une teneur en groupes uréthanne de 2,5 à 15,0% en poids, les valeurs pour l'indice hydroxyle, l'indice d'acide et la teneur en groupes uréthanne se rapportant chaque fois à 100% de résine solide, et le composant A) étant présent sous la forme d'une solution aqueuse à 15-65% en poids, avec une viscosité à 23 °C de 10 à 30.000 mPa.s et une valeur de pH de 5 à 10.

**3.** Combinaison de liant aqueuse selon les revendications 1 et 2, caractérisée en ce que la résine de polyester du composant de liant A) représente le produit réactionnel de

a) 65 à 92% en poids d'un polyester-polyol possédant un indice hydroxyle de 50 à 500 et un indice d'acide ≦6,

b) 0 à 7% en poids d'un diol du domaine de poids moléculaire de 62 à 240,

c) 2,5 à 7,5% en poids d'un acide 2,2-bis(hydroxyméthyl)alcane-carboxyliqueou d'une quantité, correspondant à cette quantité d'acide, d'un sel de t-amine d'un acide de ce type, et

d) 8 à 30% en poids d'au moins un composant d'isocyanate au moins difonctionnel du domaine de poids moléculaire de 168 à 2000,

dans laquelle les pourcentages indiqués pour a) à d) se complètent pour donner 100%.

**4.** Combinaison de liant aqueuse selon les revendications 1 à 3, caractérisée en ce que le polyester-polyol a), présent en étant lié par voie chimique dans le composant de résine de polyester, représente le produit réactionnel de

$a_1$) 0 à 60% en poids d'acides monocarboxyliques contenant de 6 à 22 atomes de carbone,

$a_2$) 10 à 65% en poids d'acides di- et/ou tricarboxyliques, respectivement de leurs anhydrides,

$a_3$) 15 à 70% en poids d'alcools difonctionnels et/ou à fonctionnalité supérieure,

$a_4$) 0 à 30% en poids de monoalcools,

$a_5$) 0 à 15% en poids d'acides hydroxycarboxyliques, de lactones, d'aminoalcools et/ou d'acides aminocarboxyliques,

dans laquelle les pourcentages indiqués pour $a_1$) à $a_5$) se complètent pour donner 100%.

**5.** Combinaison de liant aqueuse selon les revendications 1 à 4, caractérisée en ce que la résine de polyester du composant A) présente un poids moléculaire $\overline{M}_w$ de 6000 à 50.000, un indice hydroxyle de 45 à 190 mg de KOH/g de substance, un indice d'acide de 14 à 33 mg de KOH/g de substance, dans laquelle, de 40 à 100% des groupes carboxyle réalisant cet indice acide sont présents sous la forme carboxylate, ainsi qu'une teneur en groupes uréthanne de 5,0 à 12,5% en poids, les valeurs pour l'indice hydroxyle, l'indice d'acide et la teneur en groupes uréthanne se rapportant chaque fois à 100% de produits solides, et dans laquelle le composant A) est le produit réactionnel de

a) 70 à 87% en poids d'un produit d'estérification possédant un indice hydroxyle de 80 à 350 et un indice d'acide ≦4, constitué par

$a_1$) 0 à 55% en poids d'acides monocarboxyliques contenant de 7 à 20 atomes de carbone,

$a_2$) 13 à 56% en poids d'acides di- et/ou tricarboxyliques, respectivement de leurs anhydrides,

$a_3$) 23 à 63% en poids d'alcools difonctionnels et/ou à fonctionnalité supérieure,

dans laquelle les pourcentages indiqués pour $a_1$) à $a_3$) se complètent pour donner 100%,

b) 0 à 3% en poids d'un diol du domaine de poids moléculaire de 62 à 240,

c) 3,0 à 6,5% en poids d'acide diméthylolpropionique, respectivement, d'une quantité, correspondant à cette quantité d'acide, d'un sel de t-amine de cet acide, et

d) 10 à 23% en poids d'au moins un composant d'isocyanate au moins difonctionnel du domaine de poids moléculaire de 168 à 2000, et dans laquelle les pourcentages indiqués pour a) à d) se complètent pour donner 100%,

et le composant d'isocyanate B) est constitué par un ou plusieurs polyisocyanates organiques contenant des groupes isocyanate liés exclusivement à des radicaux (cyclo)aliphatiques.

**6.** Procédé pour la préparation d'agents d'enduction possédant une teneur maximale en solvants de 20% en poids, qui sont constitués par une combinaison de liant aqueuse et éventuellement par des adjuvants et des additifs connus dans la technologie des laques, des vernis ou des peintures, caractérisé en ce qu'on émulsifie, dans une solution ou une dispersion aqueuse de résines de polyester contenant des groupes uréthanne, carboxylate et hydroxyle, un composant de polyisocyanate possédant une viscosité à 23°C de 50 à 10.000 mPa.s, constitué par au moins un polyisocyanate organique, que l'on met en oeuvre éventuellement en mélange avec des quantités minimes de solvants inertes, les proportions des deux composants correspondant à un rapport d'équivalent NCO/OH, rapporté aux groupes isocyanate du composant de polyisocyanate et aux groupes hydroxyle de la résine de polyester, de 0,5:1 à 5:1, les adjuvants et les additifs de la solution, respectivement de la dispersion de résine de polyester contenant des groupes uréthanne, carboxylate et hydroxyle, utilisés éventuellement de manière conjointe, ayant été incorporés avant l'addition du composant de polyisocyanate.

**7.** Procédé selon la revendication 6, caractérisé en ce que

dans une première étape réactionnelle, on prépare une résine de polyester présentant des groupes uréthanne, carboxylate et hydroxyle possédant un poids moléculaire $\overline{M}_w$ de 3000 à 100.000, un indice hydroxyle de 20 à 240, un indice d'acide de 10 à 45 et une teneur en groupes uréthanne de 2,5 à 15,0% en poids, par mise en réaction, à une température de 40 à 140°C, dans une solution organique à 40-99% en poids, de

a) 65 à 92% en poids d'un polyester-polyol possédant un indice hydroxyle de 50 à 500 et un indice d'acide ≦6,

b) 0 à 7% en poids d'un diol du domaine de poids moléculaire de 62 à 240,

c) 2,5 à 7,5% en poids d'un acide 2,2-bis(hydroxyméthyl)alcane-carboxyliqueou d'une quantité, correspondant à cette quantité d'acide, d'un sel de t-amine d'un acide de ce type, et

d) 8 à 30% en poids d'au moins un composant d'isocyanate au moins difonctionnel du domaine de poids moléculaire de 168 à 2000,

ensuite, dans une deuxième étape réactionnelle, on dissout ou on disperse dans de l'eau, la résine de polyester ainsi obtenue, dans laquelle, éventuellement, avant et/ou au cours de cette étape, on transforme en groupes carboxylate, par neutralisation, de 25 à 100% des groupes carboxyle éventuellement présents, et dans laquelle, de manière facultative, on élimine du mélange réactionnel par distillation, en tout ou en partie, le solvant organique auxiliaire avant et/ou pendant et/ou après la préparation de la solution ou de la dispersion aqueuse, et dans lequel, enfin

dans une troisième étape réactionnelle, éventuellement après addition d'adjuvants et d'additifs, on émulsifie le composant de polyisocyanate dans la solution ou dans la dispersion aqueuse de la résine de polyester ainsi obtenue.

**8.** Utilisation de combinaisons de liants selon les revendications 1 à 4, comme liants pour des laques, des vernis ou des peintures, des agents d'enduction ou encore des matières d'étanchéification.

**9.** Utilisation selon la revendication 8, comme liants pour des laques, des vernis ou des peintures ou encore des agents d'enduction durcissant à une température de 40-250°C.

**10.** Utilisation selon les revendications 8 et 9, comme liants dans des laques, des vernis ou des peintures ou encore des agents d'enduction durcissant à une température de 80-160°C.